# EUROPEAN PATENT APPLICATION

(11) **EP 2 228 270 A1**
(43) Date of publication of application: **15.09.2010**
(21) Application number: 10155442.6
(22) Date of filing: 04.03.2010
(51) Int. Cl.: B60R 25/00, G07C 9/00

(54) **Vehicle personalization using a near field communications transponder**

(30) Priority: 11.03.2009 US 401801
(71) Applicant: Delphi Technologies, Inc., Troy, MI 48007 (US)
(72) Inventor: Dobosz, Paul J., Noblesville, IN Indiana 46060-9753 (US)
(74) Representative: Denton, Michael John

(57) **Abstract**

A vehicle personalization system and method that includes a cell phone and a vehicle. When a vehicle user prepares to use a vehicle, personalization data such as a preferred seat position is quickly transferred from the cell phone to the vehicle and used by the vehicle to adjust a vehicle feature to correspond to the preferences of the vehicle user. The cell phone and the vehicle arc both equipped with near field communications (NFC) transponders to facilitate the transfer of personalization data. The vehicle also has a processor coupled to the vehicle NFC transponder to input the received personalization data that is also adapted to personalize the vehicle device in accordance with the received personalization data when the personalization data is downloaded from the cell phone to the vehicle.

## Description

### TECHNICAL FIELD

The invention relates to using near field communications transponders to transfer data for personalizing a vehicle. More specifically, the invention equips a cell phone and a vehicle with near field communications transponders for transferring personalization data between the cell phone and the vehicle.

### BACKGROUND OF THE INVENTION

Vehicles such as automobiles have vehicle devices that are personalized for the comfort, convenience, and safety of the vehicle user. Examples of vehicle devices that can be personalized include a seat having an adjustable seat position, a mirror having an adjustable mirror position, and an entertainment system having various preferred settings such as a preferred broadcast station. Other vehicle devices are associated with services. Examples of vehicle devices associated with services include an assistance communications device for communicating with assistance services like On-Star, a satellite radio for receiving a satellite broadcast service like XM or Sirius, or a toll transponder for communicating with automated toll road services to pay road tolls. Such services are normally pre-arranged or purchased for the user's personal vehicle. Unfortunately, when the user travels in a vehicle other than the user's personal vehicle, such as renting a vehicle at an airport, using a loaner vehicle when the personal vehicle is being serviced, or using a vehicle from a pool of company vehicles; the vehicle user must adjust all of the vehicle devices to the user's personal preferences before operating the vehicle. Furthermore, the user may not be able to make use of a previously paid for service while using a vehicle other than the user's personal vehicle.

What is needed is a convenient way for a vehicle user to quickly and conveniently personalize any vehicle that the user is using and provide access to a previously paid for service.

### SUMMARY OF THE INVENTION

A vehicle personalization system including a cell phone and a vehicle. The cell phone has a memory for storing personalization data of a user for a vehicle device. The cell phone also has a first near field communications (NFC) transponder coupled to the memory and configured to transmit the personalization data. The vehicle has a second NFC transponder configured to receive the personalization data from the first NFC transponder and a processor coupled to the second NFC transponder to input the received personalization data. The processor is also adapted to personalize the vehicle device in accordance with the received personalization data when the personalization data is downloaded from the cell phone to the vehicle.

A method of operating a vehicle personalization system having a cell phone and a vehicle. The cell phone has a memory to store personalization data of a user for a vehicle device, and a first near field communications (NFC) transponder coupled to the memory and configured to transmit the personalization data. The vehicle has a second NFC transponder configured to receive the personalization data, and a processor coupled to the second NFC transponder to input the received personalization data and adapted to personalize the vehicle device in accordance with the received personalization data. The method includes downloading personalization data from the cell phone to the vehicle including the steps of recalling the personalization data from the memory, transmitting the personalization data by the first NFC transponder, receiving the personalization data by the second NFC transponder, and personalizing the vehicle device in accordance with the personalization data.

Further features and advantages of the invention will appear more clearly on a reading of the following detail description of the preferred embodiment of the invention, which is given by way of non-limiting example only and with reference to the accompanying drawings.

### BRIEF DESCRIPTION OF DRAWINGS

This invention will be further described with reference to the accompanying drawings in which:

Fig. 1 is a cut-away perspective view of a vehicle equipped with a vehicle personalization system in accordance with this invention;

Fig. 2 is a detail view of the cell phone in Fig. 1;

Fig. 3 is a block diagram representation of the system in Fig. 1;

Fig. 4 is a flow chart of a method of operating the system in Fig. 1; and

Fig. 5 is a flow chart of a method of operating the system in Fig. 1.

### DESCRIPTION OF THE PREFERRED EMBODIMENT

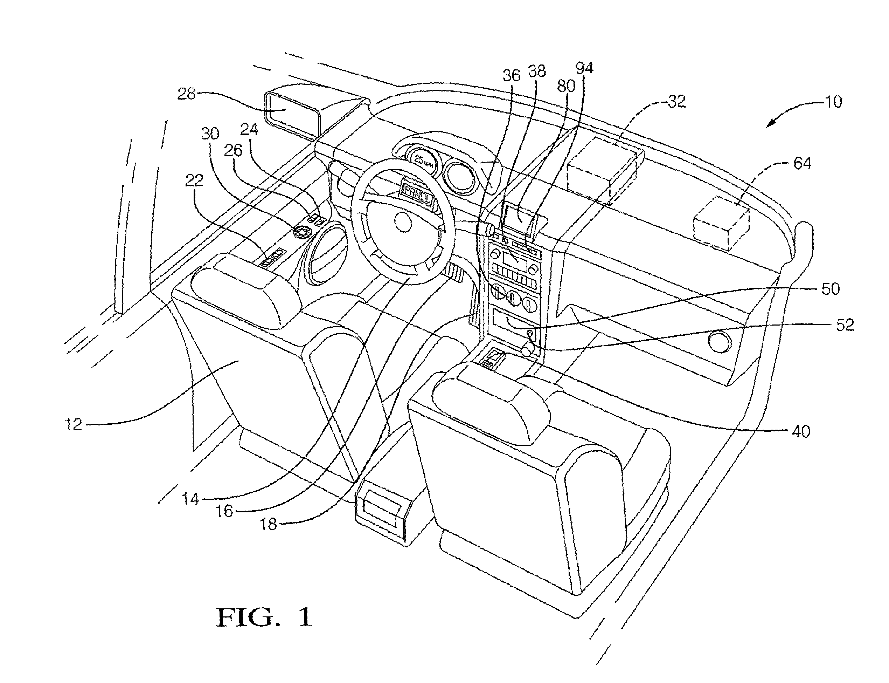

In accordance with a preferred embodiment of this invention, Fig. 1 shows an interior of a vehicle 10. The vehicle 10 has a number of vehicle devices including a seat 12 for the user to occupy, a steering wheel 14 for controlling the direction of the vehicle when the vehicle is moving, a brake pedal 16 for decelerating or stopping the vehicle, and an accelerator pedal 18 for accelerating the vehicle. The seat 12 has an adjustable position so the position of the seat 12 within the interior can be adjusted in accordance with a preference of the user.
The position of seat 12 may be adjusted using a seat position control 22. The adjustable aspect of the seat may include moving the seat forward, back, up, down, or tilting the backrest portion of the seat. The steering wheel 14 may have an adjustable position so the position of the steering wheel can be adjusted in accordance with a preference of the user. If adjustable, the position of steering wheel 14 may be adjusted using a steering wheel position control 24. The adjustable aspect of the steering wheel may include tilting the steering wheel up or down, or telescoping the steering wheel in or out. The brake pedal 16 and accelerator pedal 18 may have adjustable positions so the distance from the user to the pedals can be adjusted in accordance with a preference of the user. If adjustable, the position of the pedals may be adjusted using a pedal position control 26. The adjustable aspect of the pedals may be to move the pedals closer to or further from the seat 12. The vehicle 10 also has a mirror 28 to assist the user in observing an area alongside or behind the vehicle. The mirror 28 has an adjustable position so the area observed can be adjusted in accordance with a preference of the user. The position of the mirror 28 may be adjusted using a mirror position control 30.

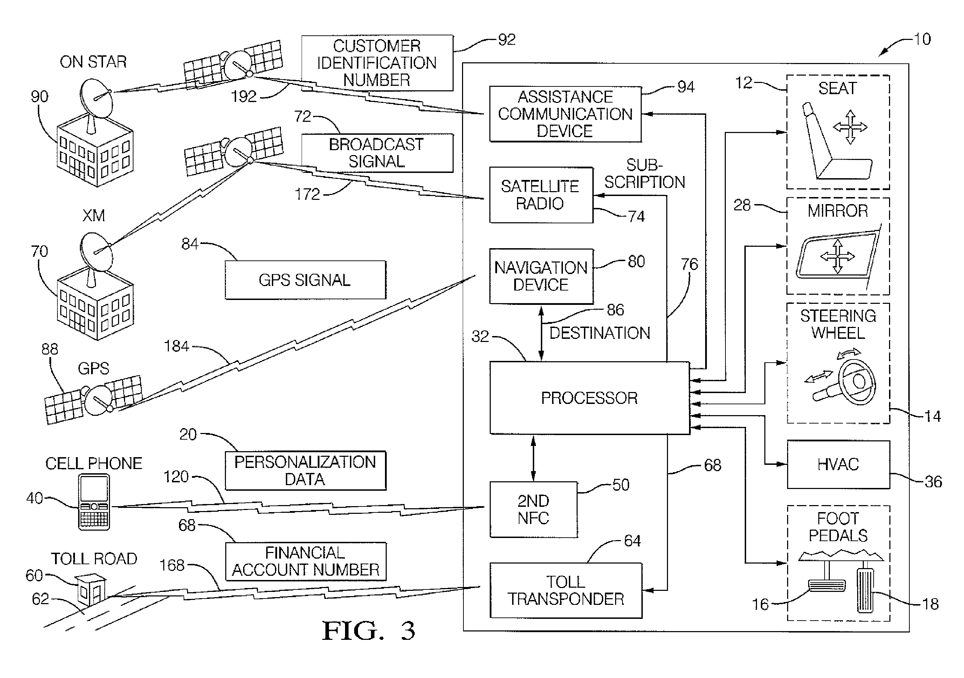

The vehicle 10 also has a processor 32 coupled to one or more of the adjustable vehicle devices such as the seat 12, the steering wheel 14, the brake pedal 16, the accelerator pedal 18, and the mirror 28, as illustrated in Fig. 3. The processor 32 may include several interconnected components such as a memory component, a logic component, and an input/output component, or the processor 32 may be a commercially available single-chip microprocessor. The coupling may be provided by individual wires between the processor 32 and each vehicle device, or may be provided by a shared communications bus. The processor 32 is adapted to adjust or personalize the one or more of the adjustable vehicle devices in accordance with personalization data 20 received by the processor 32. The vehicle may further have a heating/ventilation/air conditioning (HVAC) system operated using a HVAC control 36 that includes a cabin temperature setting for assisting the user with controlling the temperature of the vehicle interior, or an entertainment system having an entertainment control 38 for adjusting an entertainment setting such as a preferred broadcasting station. The user may adjust these systems manually through the controls coupled to the respective systems. The processor 32 may be coupled to the HVAC system or the entertainment system and the personalization data 20 may include corresponding personal preferences for the cabin temperature setting and the entertainment setting.

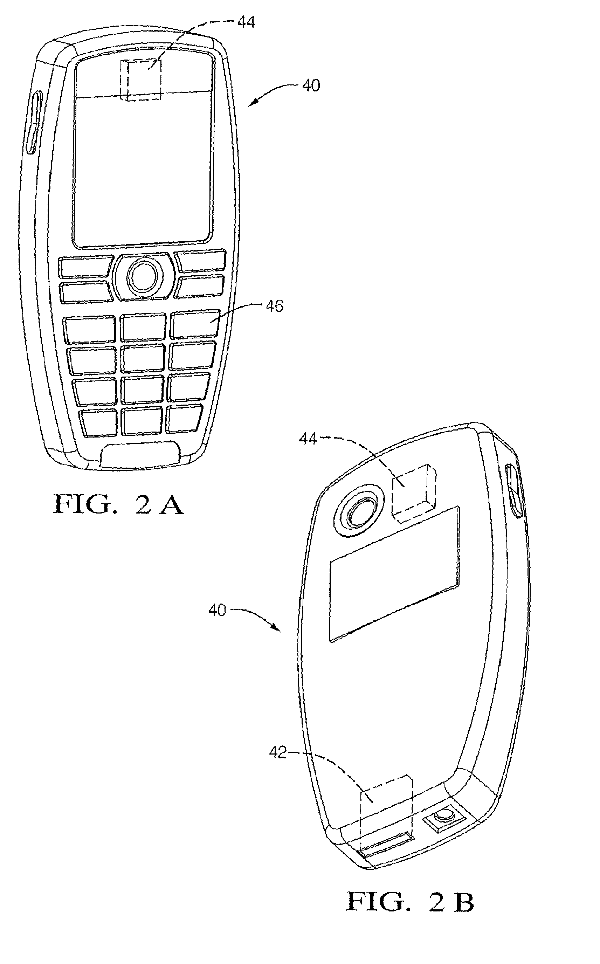

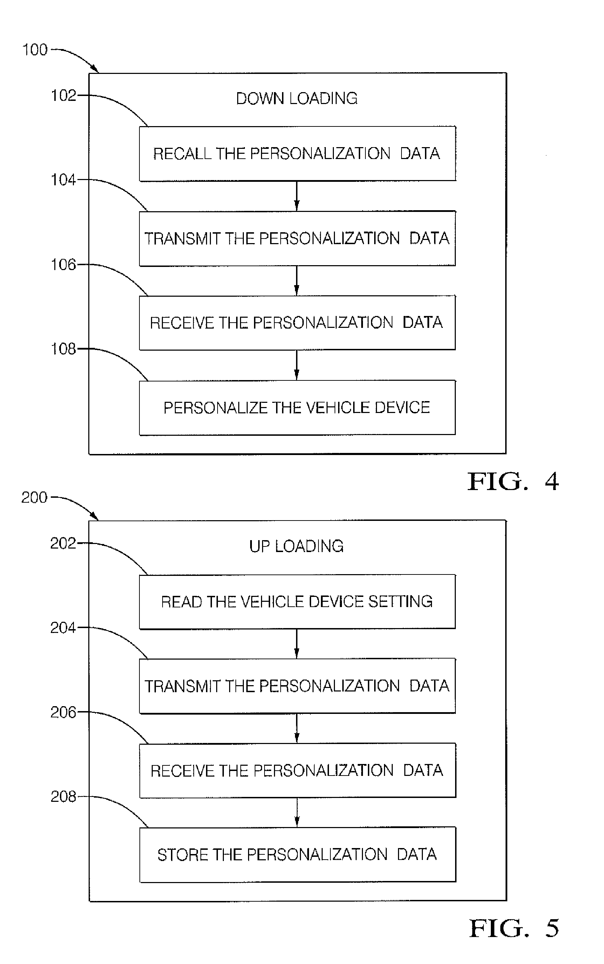

Fig. 1 also shows a cell phone 40 that is shown in more detail in Fig. 2. The cell phone 40 has a memory 42 for storing the personalization data 20 of a user for a vehicle device, and a first near field communications (NFC) transponder 44 coupled to the memory and configured to transmit the personalization data 20. An NFC transponder is a known, commercially available, short-range wireless communication transponder that communicates with another NFC transponder for transferring data. The communications range between NFC transponders is normally less than one meter and sometimes limited to less than a few centimeters. Referring to Fig. 1, the vehicle 10 includes a second NFC transponder 50. As illustrated in Fig. 3, the second NFC transponder 50 is configured to receive the personalization data 20 from the first NFC transponder 44, whereby personalization data 20 is downloaded from the cell phone 40 to the vehicle 10. As used herein, downloading of personalization data 20 includes when the personalization data is recalled from the memory 42, transmitted by the first NFC transponder 44, and received by the second NFC transponder 50, as illustrated in Fig. 4. Referring to Fig. 3, the personalization data 20 is downloaded from the cell phone 40 to the vehicle 10 over a communication path 120. Cell phones tend to be personal items used by a single user, so cell phones can be useful for storing personalization data for a vehicle. Vehicles having memory for storing personalization data are known, but when personalization data is stored in the vehicle, it is not readily transportable to another vehicle. By storing the personalization data 20 in cell phone 40, the personalization data 20 is readily downloaded to the vehicle 10, or any other vehicle the user may occupy. The processor 32 is coupled to the second NFC transponder 50 to input the received personalization data 20 and adapted to personalize vehicle devices to preferred settings in accordance with the received personalization data by adjusting the vehicle devices.
In another embodiment, the first NFC transponder 44 is further configured to receive the personalization data 20; and the second NFC transponder 50 is further configured to transmit the personalization data 20 over the communication path 120, wherein the personalization data 20 is uploaded from the vehicle 10 to the cell phone 40. As used herein, uploading personalization data 20 includes when personalization data is output by the processor 32, transferred to the second NFC transponder 50, transmitted by the second NFC transponder 50, received by to the first NFC transponder 44, and stored in cell phone memory 42, as illustrated in Fig. 5. Uploading personalization data 20 may be useful when the processor contains personalization data that is less convenient to enter and store in the cell phone memory 42 by another means such as by the keypad 46. Uploading may be advantageous for entering personalization data 20 into memory 42 when the vehicle device is configured so the user can personalize the vehicle device to a setting, the processor 32 is adapted read the setting of vehicle device and generate the personalization data 20 based on the setting, and the processor 32 is adapted to output the personalization data to the second NFC transponder 50 for uploading from the vehicle to the cell phone 40. For example, the position of seat 12 could be adjusted by the user using the seat position control 22, the processor 32 could then read the seat position and generate personalization data 20 based on the seat position, and then the personalization data 20 could be uploaded to the cell phone memory 42. This process of the user adjusting a vehicle device to a setting and the processor reading the setting for uploading can be used to acquire personalization data for other vehicle devices. For seat position, the personalization data 20 based on the seat position may be in the form of an estimate of the physical size of the user, or alternately a measurement of the seat position relative to some reference. Either form of personalization data 20 could be used to adjust the seat position in another vehicle, even if the other vehicle is not the same make or model as the vehicle from which the personalization data is based. Similarly, the personalization data such as steering wheel position or mirror position can also be in a form that is useful when used to adjust vehicle devices in other vehicles.

Fig. 3 is a block diagram depicting coupling between the processor 32 and adjustable devices including the seat 12, the mirror 28, the steering wheel 14, the brake pedal 16, and the acceleration pedal 18. The coupling may be supplied by wires or may be a communications bus where multiple vehicle devices communicate over the communications bus. The arrow at each end of the lines depicting the coupling indicates that data is communicated in both directions. For example, data can be communicated from the processor 32 to the seat 12 for adjusting the position of the seat 12, or data can be communicated from the seat 12 to the processor 32 for indicating the present position of the seat 12. The processor 32 is also coupled to the second NFC transponder 50 and the arrows at each end of the line depicting the coupling indicate that data is communicated or transferred from the second NFC transponder 50 to the processor 32 and from the processor 32 to the second NFC transponder 50.

In another embodiment, the personalization data 20 is downloaded from the cell phone 40 to the vehicle 10 in response to the first NFC transponder 44 being brought into proximity of the second NFC transponder 50. The NFC transponders can be configured to detect when the first NFC transponder 44 is closer to the second NFC transponder than a predetermined distance, closer than 10 centimeters for example. When detection occurs, downloading of the personalization data 20 occurs automatically. Fig. 1 shows the cell phone 40 positioned on a console adjacent the seat 12 and relatively close to second NFC transponder 50. Alternately, the predetermined distance could be larger so when the cell phone is carried by the user, such as in a clothing pocket worn by the user, downloading would automatically commence when the user entered the vehicle interior. Furthermore, the NFC transponders may be configured to download personalization data 20 in response to an action on the part of the user, such as manually activating either of the NFC transponders using the cell phone keypad 46 or a button 52 on the vehicle 10.

In another embodiment, the cell phone 40 has a keypad 46 for entering personalization data into the memory 42. For some personalization data, it may more convenient to enter personalization data by way of the keypad 46. For example, the keypad 46 may be more convenient for entering a preferred broadcasting station for the entertainment control 38, or preferable when configuring the system to either download personalization data 20 automatically when the transponders are close to each other or alternately to download personalization data 20 in response to an action by the user such as pressing button 52.

In another embodiment, there is a toll road service equipped with automated toll collection stations 60 that charge a toll for using a road 62, where the road may be an expressway, a bridge, or a tunnel. If the vehicle is equipped with a toll transponder 64, the toll transponder 64 transmits a financial account number 68 to the collection station 60 over communications path 168 to pay the toll when the vehicle 10 passes by the collection station 60. The advantage is that a user can pay the toll without having to stop or slow down to pay the toll with cash. When the toll transponder in the vehicle has been initialized, the toll transponder is prepared to transmit the financial account number 68 when necessary. In this embodiment, the personalization data 20 includes the financial account number 68. When the personalization data 20 is downloaded, the toll transponder is initialized by the processor 32 with the financial account number

68 so when the vehicle passes a toll collection station, the toll road service 60 can charge a toll to the financial account.

In another embodiment, the system further comprises a satellite radio service 70 transmitting a broadcast signal 72 over communications path 172. The vehicle includes a satellite radio 74 that is part of the entertainment system 38.
The satellite radio 74 requires a subscription 76 to activate the satellite radio 74 for receiving the broadcast signal 72, and the personalization data 20 includes the subscription. When the personalization data 20 including the subscription is downloaded, the satellite radio 74 is activated with the subscription 76 so the broadcast signal 72 can be received.

In another embodiment, the vehicle has a navigation device 80 to assist the user with navigating to a destination 86 and the personalization data 20 includes the destination 86. When the personalization data 20 including the destination is downloaded, the navigation device 80 is loaded with the destination 82. The navigation device 80 receives a navigation signal 84 from a navigation satellite 88 via communication path 184 for determining the present location of the vehicle 10. The navigation device 80 may also contain information regarding the location of roadways and indicate a route for the vehicle to travel to the destination.

In another embodiment, the system further comprises an assistance service provider 90. Assistance service providers like On-Star provide services such as sending emergency help if a collision occurs and vehicle navigation assistance. Such assistance service providers charge a fee for the assistance services and can confirm the identity of the user with a corresponding customer identification number 92. To communicate with the assistance service provider, the vehicle has an assistance communications device 94, and the personalization data 20 includes the customer identification number 92. When the personalization data 20 including the customer identification number 92 is downloaded, the assistance communications device is supplied with the customer identification number via communications path 192. When the assistance communications device 94 is activated, the assistance service provider 90 can confirm that the customer identified by the customer identification number has paid for the services requested.

Fig. 4 shows flowchart 100 for operating a vehicle personalization system. The system operates by downloading personalization data from the cell phone to the vehicle by performing the steps shown. At step 102, the first NFC transponder recalls the personalization data from the cell phone memory 42. At step 104, the first NFC transponder transmits the personalization data. At step 106, the second NFC transponder 50 receives the personalization data. At step 108 the processor 32 inputs the personalization data from the second NFC transponder 50 and personalizes the vehicle device in accordance with the personalization data 20.

In another embodiment, Fig. 5 shows flowchart 200 for uploading personalization data from the cell phone to the vehicle. At step 202, the processor 32 reads a vehicle device setting. Processor 32 may read an analog voltage indicating the position of a vehicle device or may read a digital message from the vehicle device indicating the present setting of the vehicle device. At step 204, the second NFC device 50 transmits the personalization data 20. At step 206, the first NFC device receives the personalization data 20. At step 208, the personalization data 20 is stored in the cell phone memory 42.

In the preferred embodiment, personalization data 20 is transferred between a cell phone and a vehicle using NFC transponders. Alternately, personalization data 20 could be transferred between a cell phone and a vehicle using infrared transceivers such as those used in home entertainment remote controllers or other types of wireless radio frequency (RF) transceivers. The vehicle depicted in Fig. 1 is a passenger vehicle. Alternately, the vehicle personalization system could be put in a commercial delivery truck, a construction vehicle or an aircraft, whereby the personalization data would include data for any device in the vehicles listed that can be adjusted to correspond to a preference of the user.

Therefore a convenient way for a vehicle user to quickly and conveniently personalize any vehicle that the user is using and provide access to a previously paid for service is provided. The personalization can occur when the vehicle user enters the car by bringing a properly equipped cell phone into close proximity with a NFC transponder coupled to the vehicle, or when a button on the cell phone or on the vehicle is pressed. The personalization includes adjusting the vehicle seat position and other ergonomic aspects of the vehicle to correspond to the preference of the vehicle user, and initializing other features of the vehicle such as a radio or toll transponder so the vehicle user can make use of the features.

While this invention has been described in terms of the preferred embodiments thereof, it is not intended to be so limited, but rather only to the extent set forth in the claims that follow.

## Claims

1. A vehicle personalization system comprising:
a cell phone comprising a memory for storing personalization data of a user for a vehicle device, and a first near field communications (NFC) transponder coupled to the memory and configured to transmit the personalization data; and
a vehicle comprising a second NFC transponder configured to receive the personalization data from the first NFC transponder, and a processor coupled to the second NFC transponder to input the received personalization data and adapted to personalize the vehicle device in accordance with the received personalization data, wherein personalization data is downloaded from the cell phone to the vehicle.

2. A system in accordance with claim 1, wherein
the first NFC transponder is further configured to receive the personalization data; and
the second NFC transponder is further configured to transmit the personalization data, wherein the personalization data is uploaded from the vehicle to the cell phone.

3. A system in accordance with claim 2, wherein
the vehicle device is further configured so the user can personalize the vehicle device to a setting;
the processor is further adapted read the setting of vehicle device and generate the personalization data based on the setting; and
the processor is further adapted to output the personalization data to the second NFC transponder for uploading from the vehicle to the cell phone.

4. A system in accordance with claim 1, wherein
the system further comprises a toll road service charging a toll for using a road;
the vehicle further comprises a toll transponder requiring a financial account number to communicate to the toll road service for paying the toll; and
the personalization data further comprises the financial account number.

5. A system in accordance with claim 1, wherein
the system further comprises a satellite radio service transmitting a broadcast signal;
the vehicle further comprises a satellite radio requiring a subscription to activate the satellite radio for receiving the broadcast signal; and
the personalization data further comprises the subscription.

6. A system in accordance with claim 1, wherein
the vehicle further comprises a navigation device to assist the user with navigating to a destination; and
the personalization data further comprises the destination.

7. A system in accordance with claim 1, wherein
the system further comprises an assistance service provider requiring a customer identification number for assisting the user;
the vehicle further comprises an assistance communications device for communicating with the assistance service provider; and
the personalization data further comprises the customer identification number.

8. A system in accordance with claim 1, wherein
the vehicle further comprises an adjustable seat, an adjustable mirror, an adjustable cabin temperature, an adjustable steering wheel, an adjustable brake pedal, an adjustable accelerator pedal, or an entertainment system; and
the personalization data further comprises corresponding personal preferences for a seat position, a mirror position, a cabin temperature, a steering wheel position, a brake pedal position, an accelerator pedal position, or a entertainment setting, wherein the personalization data is downloaded from the cell phone for adjusting the vehicle devices.

9. A method of operating a vehicle personalization system comprising a cell phone comprising a memory to store personalization data of a user for a vehicle device, and a first near field communications (NFC) transponder coupled to the memory and configured to transmit the personalization data; and a vehicle comprising a second NFC transponder configured to receive the personalization data, and a processor coupled to the second NFC transponder to input the received personalization data and adapted to personalize the vehicle device in accordance with the received personalization data, wherein said method comprises downloading personalization data from the cell phone to the vehicle comprising the steps of:
recalling the personalization data from the memory;
transmitting the personalization data by the first NFC transponder;
receiving the personalization data by the second NFC transponder; and
personalizing the vehicle device in accordance with the personalization data.

10. A method in accordance with claim 9, wherein the first NFC transponder is further configured to receive the personalization data and the second NFC transponder is further configured to transmit the personalization data, wherein said method further comprises uploading personalization data from the vehicle to the cell phone comprising the steps of:
transmitting the personalization data by the second NFC transponder; receiving the personalization data by the first NFC transponder; and storing the personalization data in the cell phone memory.

11. A method in accordance with claim 10, wherein the vehicle device is further configured so the user can personalize the vehicle device to a setting, the processor is further adapted to read the setting of vehicle device and generate the personalization data based on the setting, and output the personalization data to the second NFC transponder, wherein said method of uploading further comprises;
reading the setting of the vehicle device;
generating the personalization data; and
transferring the personalization data to the second NFC transponder.

12. A method in accordance with claim 9, wherein downloading occurs when the first NFC transponder is brought into proximity of the second NFC transponder.

13. A method in accordance with claim 9, wherein the cell phone further comprises a keypad, wherein said method further comprises:
entering the personalization data into the memory with the keypad.

14. A method in accordance with claim 9, wherein
the vehicle further comprises one or more vehicle devices from a group comprising an adjustable seat, an adjustable mirror, an adjustable cabin temperature, an adjustable steering wheel, an adjustable brake pedal, an adjustable accelerator pedal, and an adjustable radio setting; and
the personalization data correspondingly further comprises one or more of a seat position, a mirror position, a cabin temperature, a steering wheel position, a brake pedal position, an accelerator pedal position, and a radio setting, wherein the step of personalizing the vehicle includes personalizing the vehicle device in accordance with the corresponding personalization data.
